# EUROPÄISCHE PATENTSCHRIFT

(11) **EP 3 211 270 B1**
(45) Veröffentlichungstag und Bekanntmachung des Hinweises auf die Patenterteilung: **15.04.2020**
(21) Anmeldenummer: 17155773.9
(22) Anmeldetag: 13.02.2017
(51) Int. Cl.: F16H 3/00, F16H 3/093

(54) **DOPPELKUPPLUNGSGETRIEBE FÜR KRAFTFAHRZEUGE**
DUAL CLUTCH TRANSMISSION FOR MOTOR VEHICLES
BOÎTE DE VITESSES À DOUBLE EMBRAYAGE POUR VÉHICULES AUTOMOBILES

(30) Priorität: 25.02.2016 DE 102016202915
(43) Veröffentlichungstag der Anmeldung: 30.08.2017
(73) Patentinhaber: Ford Global Technologies, LLC, Dearborn, MI 48126 (US)
(72) Erfinder: Kirchhoffer, Johann, 50737 Köln (DE)
(74) Vertreter: Dörfler, Thomas

(56) Entgegenhaltungen:
- DE-A1-102012 213 332
- US-A1- 2013 031 989
- US-A1- 2016 167 502

## Beschreibung

Die Erfindung betrifft ein Doppelkupplungsgetriebe für Kraftfahrzeuge mit einer ersten Eingangswelle und einer zweiten Eingangswelle, zwei Kupplungen, über die die erste Eingangswelle und die zweite Eingangswelle wahlweise mit einem Antriebsmotor kuppelbar sind, zwei parallel zu den Getriebeeingangswellen angeordneten Zwischenwellen, Zahnradpaarungen von Festrädern und Losrädern, von denen ein erstes Zahnrad auf einer der Eingangswellen und ein zweites Zahnrad auf einer der Zwischenwellen angeordnet ist, Kopplungsvorrichtungen, über die die Losräder mit der jeweiligen Zwischenwelle wahlweise verbindbar sind, und je einem auf den beiden Zwischenwellen angeordneten Abtriebszahnrad, wobei die Abtriebszahnräder beider Zwischenwellen mit einem Differentialrad kämmen und jeweils mittels einer der Kopplungsvorrichtungen drehfest mit der jeweiligen Zwischenwelle wechselweise verbindbar sind.

Es ist ein Bestreben der Automobilindustrie, dass zur Reduzierung von Emissionen während der Fahrt der Betriebszustand des Antriebsmotors optimal an den aktuellen Fahrzustand des Kraftfahrzeugs angepasst wird. Dies kann beispielsweise dadurch erfolgen, dass das Getriebe eine große Gangzahl aufweist. Dabei erfolgt die Schaltung in der Weise, dass auch bei hohen Fahrgeschwindigkeiten die Motordrehzahl möglichst gering gehalten wird. Ein weiteres Ziel besteht darin, die ohne Last mitdrehenden Massen gering zu halten, um dadurch eine weitere Reduzierung der Emissionen zu bewirken.

In herkömmlicher Bauweise bedeutet eine große Gangzahl zwangsläufig eine größere Anzahl von Getriebezahnrädern und daher eine größere Baulänge, die aber in der modernen Kraftfahrzeugtechnik nicht gewünscht ist, sowie ein größeres Gewicht des Getriebes und damit verbundene höhere Verlustleistungen.

Bekannte Getriebe der eingangs genannten Art (WO 2012/084250 A1; DE 10 2013 216 387 A1) beschreiten daher bereits einen Weg in die gewünschte Richtung, indem die Möglichkeit geschaffen wird, dass der Leistungsfluss sowohl über eine der ersten Getriebeeingangswelle zugeordnete Zahnradstufe als auch über eine der zweiten Getriebeeingangswelle zugeordnete Zahnradstufe verläuft.

Bei solchen Doppelkupplungsgetrieben sind die Getriebeeingangswellen als Innen- und Außenwelle ausgebildet, wobei die Innenwelle und die Außenwelle wahlweise antreibbar sind. Die zusätzlich geschalteten Gänge können dann über einen Umweg geführt werden, der über solche Zahnräder verläuft, die auf der jeweiligen nicht angetriebenen Getriebeeingangswelle angeordnet sind.

Diese bekannten Doppelkupplungsgetriebe, mit denen sich zusätzlich zu den vorhandenen Zahnradpaarungen und den sich daraus ergebenden Gängen weitere Gänge schalten lassen, benötigen zu diesem Zweck auf den Zwischenwellen und zum Teil auch auf den Getriebeeingangswellen Hohlwelleneinrichtungen, auf denen jeweils mindestens zwei Zahnräder angeordnet sind, wobei die Hohlwellen lose auf den Getriebeeingangswellen und Zwischenwellen mitlaufen, jedoch bei Bedarf mit diesen drehfest verbunden werden können.

Die Verwendung derartiger Hohlwellenanordnungen stellt nicht nur einen hohen zusätzlichen Gewichtsanteil dar, sondern führt auch zu einer Vergrößerung der Baulängen bzw. Bauhöhen sowie zu einem verschlechterten Wirkungsgrad des Getriebes.

Bei einem Doppelkupplungsgetriebe der eingangs genannten Art (DE 10 2012 213 332 A1) ist bereits bei einem Doppelkupplungsgetriebe mit zwei Zwischenwellen eine dritte Zwischenwelle vorgesehen. Diese Zwischenwelle ist für einen siebten Vorwärtsgang vorgesehen, wobei für die notwendige Drehrichtungsumkehr ein separates Zwischenrad verwendet wird. Eine solche Konstruktion ist relativ aufwändig und dient nicht dazu, die Anzahl der Getriebezahnräder zu reduzieren und die Baulänge kurz zu halten.

Bei einem anderen Doppelkupplungsgetriebe (US 2013/0031989 A1) ist ebenfalls eine dritte Zwischenwelle vorgesehen. Diese dient jedoch ausschließlich dazu, einen Rückwärtsgang zu schalten.

Ausgehend von dem bekannten Stand der Technik liegt der Erfindung die Aufgabe zugrunde, die an sich bekannte dritte Zwischenwelle besonders vorteilhaft einzusetzen, wobei eine große Gangzahl ermöglicht wird, ohne dass die Abmessungen des Getriebes vergrößert und dessen Gewicht wesentlich erhöht wird.

Erfindungsgemäß wird diese Aufgabe dadurch gelöst, dass ein zusätzlicher Zwischenzahnradsatz mit genau zwei Zahnrädern vorgesehen ist, dass das eine Zahnrad des Zwischenzahnradsatzes auf der ersten oder zweiten Zwischenwelle sitzt, dass das andere Zahnrad des Zwischenradsatzes auf einer dritten Zwischenwelle angeordnet ist und dass auf der dritten Zwischenwelle ein drittes Abtriebszahnrad sitzt, welches mit einem der Abtriebszahnräder der ersten oder zweiten Zwischenwelle kämmt.

Das erfindungsgemäße Getriebe kann für die Vorwärtsgänge mindestens vier Radsätze, einen Zwischenradsatz und mindestens fünf Kopplungsvorrichtungen aufweisen.

Erfindungsgemäß wird dies Aufgabe dadurch gelöst, dass ein zusätzlicher Zwischenzahnradsatz vorgesehen ist, dass das eine Zahnrad des Zwischenzahnradsatzes auf der ersten oder zweiten Zwischenwelle sitzt, dass das andere Zahnrad des Zwischenzahnradsatzes auf einer dritten Zwischenwelle angeordnet ist und dass auf der dritten Zwischenwelle ein drittes Abtriebszahnrad sitzt, welches mit einem der Abtriebszahnräder der ersten oder zweiten Zwischenwelle kämmt.

Der Zwischenzahnradsatz kann wahlweise mit allen Gängen kombiniert werden, wobei der Zwischenzahnradsatz als Multiplikator wirkt, d.h., dass die über die erste und/oder zweite Zwischenwelle schaltbaren Gänge über den Zwischenzahnradsatz sowie die Zwischenwelle verdoppelt werden können. Das auf der dritten Zwischenwelle sitzende dritte Abtriebszahnrad kämmt dann also mit einem der beiden Abtriebszahnräder der ersten oder zweiten Zwischenwelle, die in dieser Position lose auf ihren Zwischenwellen mitlaufen müssen, um keine Blockade zwischen dem dritten Abtriebszahnrad und dem ersten bzw. zweiten Abtriebszahnrad zu erzeugen.

Vorzugsweise sind sämtliche auf der ersten und zweiten Zwischenwelle angeordneten Zahnräder als Losräder ausgebildet, wobei zumindest die für die Abtriebszahnräder der ersten und zweiten Zwischenwelle vorgesehenen Kopplungsvorrichtungen beidseitig wirkend ausgebildet sind.

Es kann also mit dieser Kopplungsvorrichtung sowohl das entsprechende Abtriebszahnrad als auch das dem Abtriebszahnrad benachbarte Zahnrad drehfest mit der entsprechenden Zwischenwelle verbunden werden, oder es können in einer Zwischenstellung beide benachbarten Zahnräder gelöst werden, um lose mitzulaufen.

Wenn der Leistungsfluss über die dritte Zwischenwelle erfolgt, so müssen die Abtriebszahnräder der ersten Zwischenwelle und der zweiten Zwischenwelle ausgekuppelt werden und lose auf ihrer jeweiligen Zwischenwelle mitlaufen.

Zweckmäßig ist das auf der ersten Zwischenwelle oder der zweiten Zwischenwelle sitzende Zahnrad des zusätzlichen Zwischenzahnradsatzes wahlweise mit seiner Zwischenwelle drehfest verbindbar bzw. von dieser lösbar ist.

Alternativ kann aber auch das auf der dritten Zwischenwelle angeordnete dritte Abtriebszahnrad mittels einer Kopplungsvorrichtung wahlweise mit der dritten Zwischenwelle drehfest verbindbar bzw. von dieser lösbar sein.

Mit dem erfindungsgemäßen Getriebe können elf Vorwärtsgänge schaltbar sein.

Der 1., 2., 9. und 11. Vorwärtsgang können als Verwindungsgänge über die erste Zwischenwelle und die zweite Zwischenwelle verlaufen.

Der 3., 6., 7. und 8. Vorwärtsgang sind zweckmäßig als Basisgänge über die erste Zwischenwelle oder die zweite Zwischenwelle schaltbar.

Der 4. und 5. Vorwärtsgang können wiederum als Verwindungsgänge über die erste oder zweite Zwischenwelle sowie über die dritte Zwischenwelle geschaltet werden.

Der 10. Vorwärtsgang kann wiederum als Verwindungsgang über die erste Zwischenwelle und die zweite Zwischenwelle in Kombination mit der dritten Zwischenwelle geschaltet werden.

Ferner können zwei Rückwärtsgänge als Verwindungsgänge über die erste Zwischenwelle und die zweite Zwischenwelle geschaltet werden.

Die Erfindung ist in der Zeichnung beispielhaft dargestellt und im Nachstehenden im Einzelnen anhand der Zeichnung beschrieben. Es zeigen:
- Fig. 1:: ein Ausführungsbeispiel des erfindungsgemäßen Doppelkupplungsgetriebes,
- Fig. 2:: das Schaltschema für den 1. Gang,
- Fig. 3:: das Schaltschema für den 2. Gang,
- Fig. 4:: das Schaltschema für den 3. Gang,
- Fig. 5:: das Schaltschema für den 4. Gang,
- Fig. 6:: das Schaltschema für den 5. Gang,
- Fig. 7:: das Schaltschema für den 6. Gang,
- Fig. 8:: das Schaltschema für den 7. Gang,
- Fig. 9:: das Schaltschema für den 8. Gang,
- Fig. 10:: das Schaltschema für den 9. Gang,
- Fig. 11:: das Schaltschema für den 10. Gang,
- Fig. 12:: das Schaltschema für den 11. Gang,
- Fig. 13:: das Schaltschema für den 1. Rückwärtsgang,
- Fig. 14:: das Schaltschema für den 2. Rückwärtsgang,
- Fig. 15:: eine tabellarische Zusammenstellung des Schaltschemas für elf Vorwärtsgänge und zwei Rückwärtsgange.

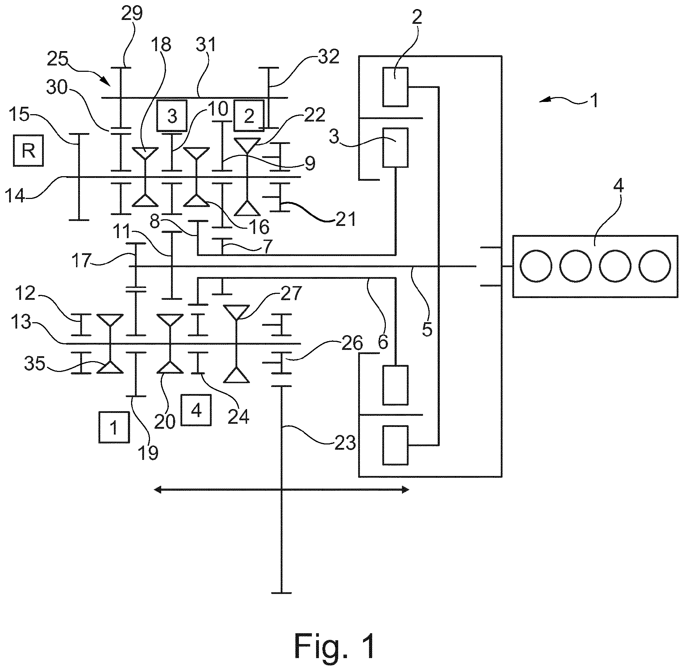

Das in Fig. 1 dargestellte Doppelkupplungsgetriebe 1 umfasst vier Radsätze für die Vorwärtsgänge, die mit quadratischen Umrandungen versehenen Ziffern 1 bis 4 versehen sind, sowie einem Radsatz "R" für die Rückwärtsgänge. Ferner sind zwei an sich bekannte Reibkupplungen 2 und 3 vorgesehen, die den von einem Antriebsmotor 4 gelieferten Leistungsfluss wahlweise auf zwei Getriebeeingangswellen übertragen. Die Getriebeeingangswellen sind als Innenwelle 5 und Außenwelle 6 ausgebildet, wobei sich die Innenwelle 5 koaxial durch die Außenwelle 5 erstreckt.

Im Inneren des in der Zeichnung nicht dargestellten Getriebegehäuses ragt die Innenwelle 5 ein Stück aus der Außenwelle 6 heraus, wobei auf dem aus der Außenwelle 6 herausragenden Ende der Innenwelle 5 zwei drehfest mit der Innenwelle 5 verbundene Zahnräder 11 und 17 angeordnet sind. Auf der Außenwelle 6 sind zwei weitere Zahnräder 7 und 8 ebenfalls drehfest angeordnet.

Ferner sind eine erste Zwischenwelle 13 und eine zweite Zwischenwelle 14 vorgesehen, auf denen ebenfalls Zahnräder angeordnet sind. Die auf den Zwischenwellen 13 und 14 angeordneten Zahnräder sind drehbar auf den Zwischenwellen 13, 14 gelagert und können je nach Einlegen des gewünschten Ganges über Kopplungsvorrichtungen drehfest mit den Zwischenwellen 13 und 14 verbunden werden.

Auf der ersten Zwischenwelle 13 sind vier Zahnräder drehbar gelagert, und zwar ein Zahnrad 24, welches mit dem auf der Außenwelle 6 angeordneten Zahnrad 8 im Eingriff steht, einem Zahnrad 19, welches mit dem auf der Innenwelle 5 sitzenden Zahnrad 17 kämmt, sowie einem Zahnrad 12 für den Rückwärtsgang, welches mit einem drehfest auf der zweiten Zwischenwelle 14 sitzenden Zahnrad 15 im Eingriff steht.

Auf der in der Zeichnung rechten Seite sitzt auf der ersten Zwischenwelle 13 ein Abtriebszahnrad 26, welches mit dem Differentialzahnrad 23 im Eingriff steht.

Zwischen diesen vier drehbar auf der ersten Zwischenwelle 13 gelagerten Zahnrädern 12, 19, 24 und 26 sind drei Kopplungsvorrichtungen 27, 20 und 35 angeordnet, die zweiseitig wirkend ausgebildet sind. Für diese drei Kopplungsvorrichtungen sind drei Schaltstellungen möglich, und zwar nach rechts, nach links und in einer mittleren Nullstellung, bei der keines der beidseitig benachbarten, lose angeordneten Zahnräder eingekuppelt ist.

Auf der zweiten Zwischenwelle 14 befindet sich das bereits erwähnte, am linken Ende der zweiten Zwischenwelle 14 angeordnete Zahnrad 15, ein Zahnrad 10, welches mit dem auf der Innenwelle 5 drehfest angeordneten Zahnrad 11 im Eingriff steht, sowie ein weiteres drehbar gelagertes Zahnrad 9, welches mit dem drehfest auf der Außenwelle 6 angeordneten Zahnrad 7 kämmt.

Am rechten Ende der zweiten Zwischenwelle 14 befindet sich ein Abtriebszahnrad 21, welches ebenso wie das auf der ersten Zwischenwelle 13 angeordnete Abtriebszahnrad 26 mit dem Differentialzahnrad 23 kämmt.

Ferner ist ein zusätzlicher Zwischenzahnradsatz 25 vorgesehen, von dem ein Zahnrad 30 auf der zweiten Zwischenwelle 14 und ein anderes Zahnrad 29 auf einer dritten Zwischenwelle 31 sitzt. Während das auf der dritten Zwischenwelle 31 angeordnete Zahnrad 29 drehfest mit der dritten Zwischenwelle 31 verbunden ist, ist das Zahnrad 30 des Zwischenzahnradsatzes 25 drehbar auf der zweiten Zwischenwelle 14 gelagert.

Zwischen den drehbar auf der zweiten Zwischenwelle 14 gelagerten Zahnrädern 21, 9, 10, 21 und 30 ist jeweils eine Kopplungsvorrichtung 18, 16 und 22 angeordnet, die ebenso wie die auf der ersten Zwischenwelle 13 angeordneten Kopplungsvorrichtungen zweiseitig wirkend ausgebildet sind. Insofern kann beispielsweise das auf der zweiten Zwischenwelle 14 angeordnete Abtriebszahnrad 21 über die Kopplungsvorrichtung 22 drehfest verbunden oder freigegeben werden. Das gleiche gilt für das benachbarte Zahnrad 9, welches ebenfalls mittels der Kopplungsvorrichtung 22 drehfest mit der zweiten Zwischenwelle 14 verbindbar oder im ausgekuppelten Zustand gelöst ist. In der Mittelstellung der Kopplungsvorrichtung 22 sind sowohl das Zahnrad 9 als auch das Abtriebszahnrad 21 drehbar und können lose mitlaufen. Entsprechendes gilt für die Kopplungsvorrichtungen 16 und 18 sowie für die durch diese bedingten Zahnräder.

Auf der dritten Zwischenwelle 31 ist außer dem fest angeordneten Zahnrad 29 ein drittes Abtriebszahnrad 32 vorgesehen, welches in dem in der Zeichnung dargestellten Ausführungsbeispiel drehfest auf der dritten Zwischenwelle 31 positioniert ist. Die gezeigte Ausführungsform der dritten Zwischenwelle 31 mit den beiden fest angeordneten Zahnrädern 29 und 32 stellt eine sehr einfache und unkomplizierte Ausführungsform dar.

Alternativ wäre es selbstverständlich auch möglich, die Zahnräder 29 und 32 über in der Zeichnung nicht dargestellte Kopplungsvorrichtungen drehfest zu fixieren bzw. zu lösen. In diesem Falle könnte dann das auf der zweiten Zwischenwelle 14 sitzende Zahnrad 30 des Zwischenzahnradsatzes 25 drehfest mit seiner Zwischenwelle 14 verbunden sein. Auf die Kopplungsvorrichtung 18 könnte dann unter Umständen verzichtet werden.

Mit dem in Fig. 1 dargestellten Getriebe lassen sich elf Vorwärtsgänge und zwei Rückwärtsgänge schalten, wobei die Gänge zum Teil als einfache Basisgänge, zum Teil als Basisgänge über die dritte Zwischenwelle 31 oder zum Teil als Verwindungsgänge über mehrere Zwischenwellen geschaltet werden können.

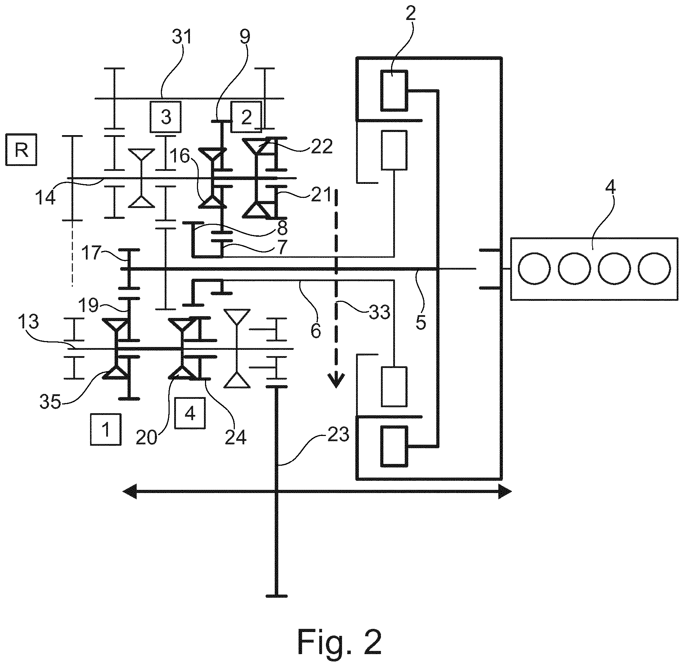

In den folgenden Figuren 2 bis 14 sind die einzelnen geschalteten Gänge veranschaulicht, wobei der Leistungsfluss jeweils dadurch kenntlich gemacht worden ist, dass die beteiligten Wellen, Zahnräder und Kopplungsvorrichtungen in dicken Linien ausgezogen sind, während die inaktiven Getriebeteile in Form von dünnen Linien dargestellt sind.

In Fig. 2 ist der 1. Gang veranschaulicht, der als Verwindungsgang geschaltet ist. Der Leistungsfluss verläuft von dem Antriebsmotor 4 über die Reibkupplung 2 und die Innenwelle 5, wobei das am linken Ende der Innenwelle 5 sitzende Zahnrad 17 mit dem Zahnrad 19 kämmt, welches auf der ersten Zwischenwelle 13 sitzt und mittels der Kopplungsvorrichtung 35 drehfest mit der ersten Zwischenwelle 13 verbunden ist.

Das ebenfalls auf der ersten Zwischenwelle 13 sitzende Zahnrad 24, welches mit dem auf der Außenwelle 6 sitzenden Zahnrad 8 kämmt, ist mittels der Kopplungsvorrichtung 20 drehfest mit der ersten Zwischenwelle 13 verbunden und überträgt somit das Drehmoment über das Zahnrad 8 auf die lose mitlaufende Außenwelle 6. Das ebenfalls auf der Außenwelle 6 sitzende, drehfest mit dieser verbundene Zahnrad 7 überträgt das Drehmoment auf das auf der zweiten Zwischenwelle 14 sitzende Zahnrad 9, welches mittels der Kopplungsvorrichtung 16 drehfest mit der zweiten Zwischenwelle 14 verbunden ist.

Das ebenfalls auf der zweiten Zwischenwelle 14 sitzende Abtriebszahnrad 21 ist mittels der Kopplungsvorrichtung 22 ebenfalls drehfest mit der zweiten Zwischenwelle 14 verbunden und überträgt folglich den Leistungsfluss auf das Differentialzahnrad 23, wie durch den gestrichelt dargestellten Pfeil 33 angedeutet.

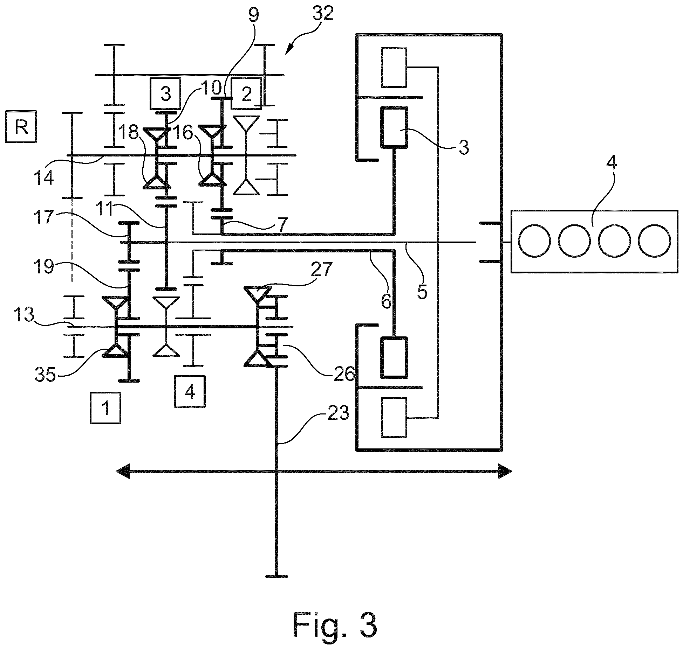

In Fig. 3 ist die Schaltung des 2. Gangs veranschaulicht, der wiederum als Verwindungsgang über die beiden Zwischenwellen 13 und 14 verläuft.

In dieser Schaltungsposition wird der Leistungsfluss von dem Motor 4 über die Reibkupplung 3 auf die Außenwelle 6 übertragen. Dabei kämmt das auf der Außenwelle 6 sitzende Zahnrad 7 mit dem auf der zweiten Zwischenwelle 14 sitzenden Zahnrad 9, welches mittels der Kopplungsvorrichtung 16 drehfest mit der zweiten Zwischenwelle 14 verbunden ist und dadurch die Zwischenwelle 14 antreibt.

Das ebenfalls auf der zweiten Zwischenwelle 14 sitzende Zahnrad 10, welches mittels der Kopplungsvorrichtung 18 ebenso wie das Zahnrad 9 drehfest mit der zweiten Zwischenwelle 14 verbunden ist, kämmt mit dem auf der lose mitlaufenden Innenwelle 5 sitzenden Zahnrad 11, welches dadurch die Innenwelle 5 antreibt. Das weiterhin auf der Innenwelle 5 sitzende Zahnrad 17 kämmt dabei mit dem auf der ersten Zwischenwelle 13 sitzenden Zahnrad 19, welches mittels der Kopplungsvorrichtung 35 drehfest mit der ersten Zwischenwelle 13 verbunden ist, wodurch die erste Zwischenwelle 13 angetrieben wird.

Das auf der ersten Zwischenwelle 13 sitzende Abtriebszahnrad 26 ist in dieser Schaltposition mittels der Kopplungsvorrichtung 27 drehfest mit der ersten Zwischenwelle 13 verbunden und überträgt somit das Drehmoment der ersten Zwischenwelle 13 auf das Differentialzahnrad 23.

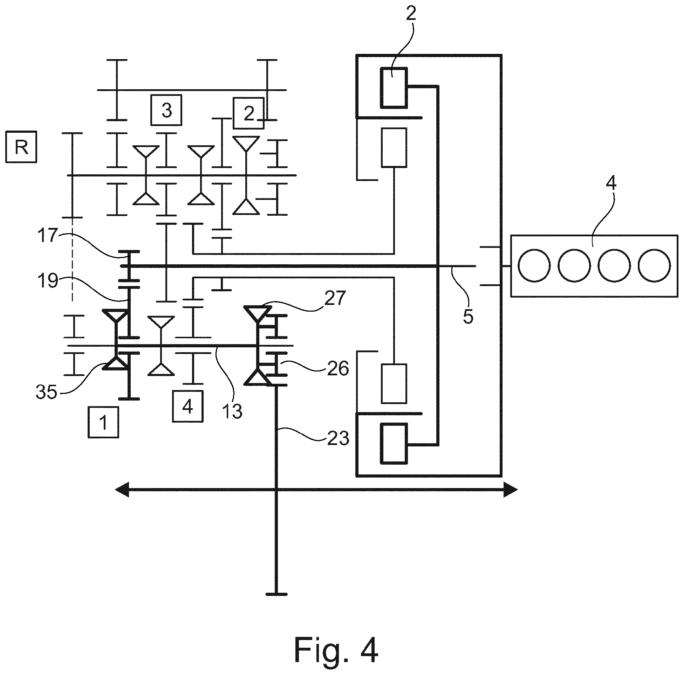

In Fig. 4 ist die Schaltstellung für den 3. Gang veranschaulicht, der als einfacher Basisgang schaltbar ist. In diesem Falle wird der von dem Antriebsmotor 4 kommende Leistungsfluss über die Reibkupplung 2 auf die Innenwelle 5 übertragen und von dort über das am linken Ende der Innenwelle 5 sitzende Zahnrad 17 auf das auf der ersten Zwischenwelle 13 sitzende Zahnrad 19, welches mittels der Kopplungsvorrichtung 35 drehfest mit der ersten Zwischenwelle 13 verbunden ist. In dieser Schaltstellung ist auch das auf der ersten Zwischenwelle 13 sitzende Abtriebszahnrad 26 mittels der Kopplungsvorrichtung 27 drehfest mit der ersten Zwischenwelle 13 verbunden, sodass der Leistungsfluss von dem Abtriebszahnrad 26 direkt auf das Differentialzahnrad 23 übertragen wird.

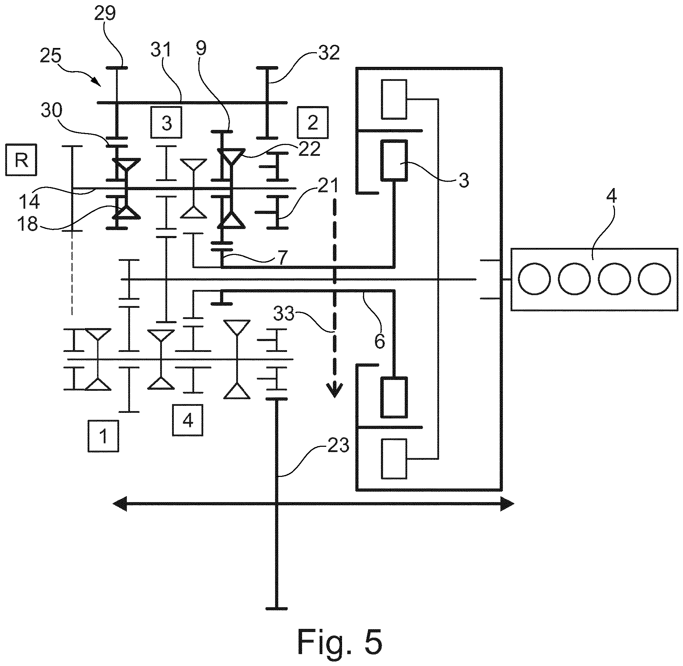

In Fig. 5 ist die Schaltpositon des 4. Gangs veranschaulicht. Der 4. Gang ist wiederum ein Basisgang, jedoch unter Zuhilfenahme des Zwischenzahnradsatzes 25.

Der von dem Antriebsmotor 4 ausgehende Leistungsfluss wird über die Reibkupplung 3 auf die Außenwelle 6 übertragen und von dort über das Zahnrad 7 auf das auf der zweiten Zwischenwelle 14 sitzende Zahnrad 9, welches mittels der Kopplungsvorrichtung 22 drehfest mit der zweiten Zwischenwelle 14 verbunden ist. Von der zweiten Zwischenwelle 14 wird der Leistungsfluss dann über den Zwischenzahnradsatz 25 auf die dritte Zwischenwelle 31 übertragen, und zwar über das Zahnrad 30, welches mittels der Kopplungsvorrichtung 18 drehfest mit der zweiten Zwischenwelle 14 verbunden ist und das Drehmoment über das Zahnrad 29 auf die dritte Zwischenwelle 31 überträgt.

Das fest auf der dritten Zwischenwelle 31 sitzende dritte Abtriebszahnrad 32 kämmt dabei mit dem lose auf der zweiten Zwischenwelle 14 sitzenden Abtriebszahnrad 21, welches den Leistungsfluss von der dritten Zwischenwelle 31 auf das Differentialzahnrad 23 überträgt, wie dies durch den gestrichelten Pfeil 33 angezeigt ist.

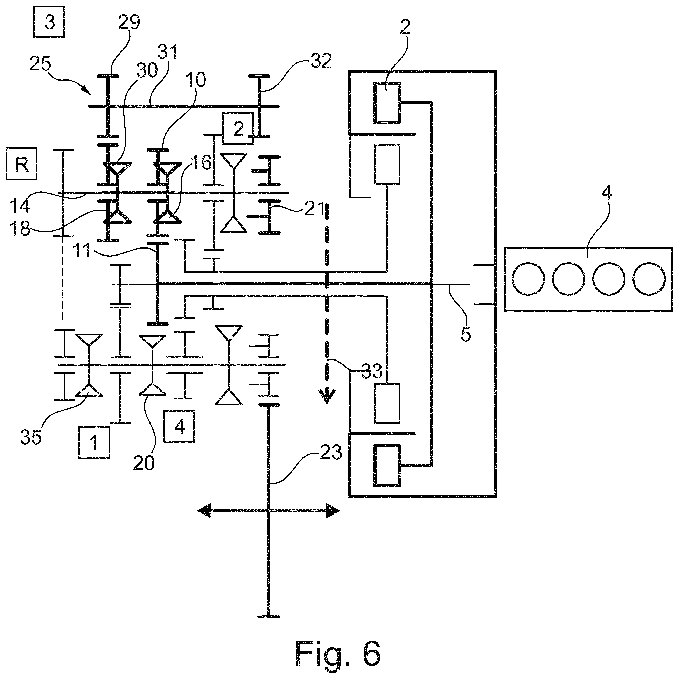

In Fig. 6 ist das Schaltschema des 5. Gang dargestellt, welcher wiederum ein Basisgang unter Zuhilfenahme des Zwischenzahnradsatzes 25 ist.

Der Leistungsfluss wird in diesem Fall von dem Antriebsmotor 4 über die Reibkupplung 3 auf die Innenwelle 5 übertragen. Das auf der Innenwelle 5 sitzende Zahnrad 11 kämmt dabei mit dem auf der zweiten Zwischenwelle 14 sitzenden Zahnrad 10, welches mittels der Kopplungsvorrichtung 16 drehfest mit der zweiten Zwischenwelle 14 verbunden ist.

Von der zweiten Zwischenwelle 14 gelangt der Leistungsfluss über den Zwischenzahnradsatz 25 auf die dritte Zwischenwelle 31, und zwar ist dabei das auf der zweiten Zwischenwelle 14 sitzende Zahnrad 30 mittels der Kopplungsvorrichtung 18 drehfest mit der zweiten Zwischenwelle 14 verbunden und überträgt sein Drehmoment über das Zahnrad 29 auf die dritte Zwischenwelle 31. Das fest auf der dritten Zwischenwelle 31 sitzende Abtriebszahnrad 32 kämmt dabei mit dem lose auf der zweiten Zwischenwelle 14 sitzenden Abtriebszahnrad 21, welches mit dem Differentialzahnrad 23 kämmt, wie durch den gestrichelten Pfeil 33 angedeutet.

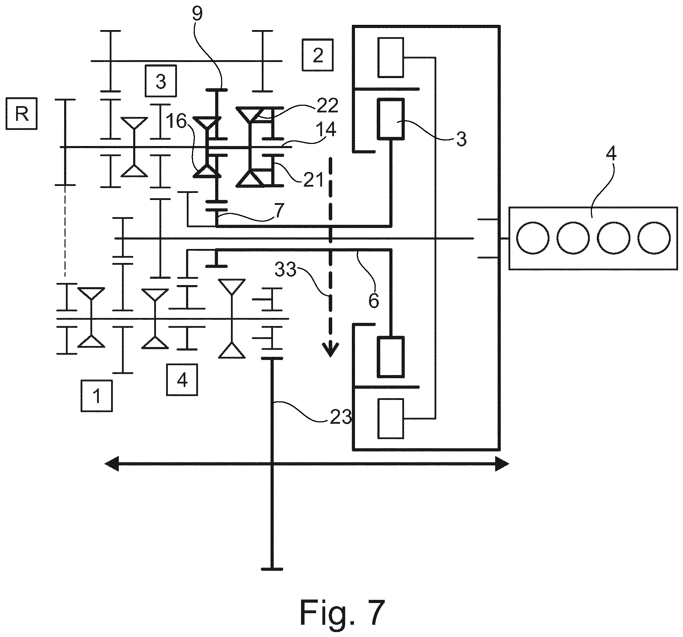

In Fig. 7 ist das Schaltschema des 6. Gangs veranschaulicht, welcher wiederum als einfacher Basisgang geschaltet ist. Der Leistungsfluss verläuft dabei von dem Antriebsmotor 4 über die Reibkupplung 3 auf die Außenwelle 6 und von dort über das Zahnrad 7 sowie das mit diesem kämmenden Zahnrad 9 auf die zweite Zwischenwelle 14. Das Zahnrad 9 ist dabei mittels der Kopplungsvorrichtung 16 drehfest mit der zweiten Zwischenwelle 14 verbunden. In gleicher Weise ist das auf der zweiten Zwischenwelle 14 sitzende Abtriebszahnrad 21 mittels der Kopplungsvorrichtung 22 drehfest mit der zweiten Zwischenwelle 14 verbunden und überträgt den Leistungsfluss unmittelbar auf das Differentialzahnrad 23, wie durch den gestrichelten Pfeil 33 angedeutet.

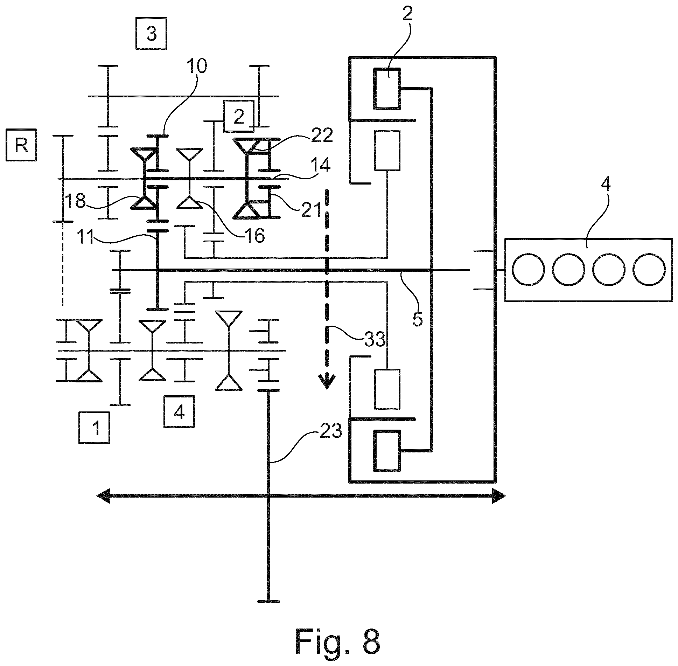

Das in Fig. 8 dargestellte Schaltschema des 7. Gangs entspricht wieder einem einfachen Basisgang, wobei der Leistungsfluss von dem Antriebsmotor 4 über die Reibkupplung 2 auf die Innenwelle 5 verläuft. Von dem auf der Innenwelle 5 drehfest angeordneten Zahnrad 11 geht der Leistungsfluss auf die zweite Zwischenwelle 14 über, und zwar kämmt das Zahnrad 11 der Innenwelle 5 mit dem Zahnrad 10 der zweiten Zwischenwelle 14, wobei das Zahnrad 10 mittels der Kopplungsvorrichtung 18 drehfest mit der zweiten Zwischenwelle 14 verbunden ist. Das auf der zweiten Zwischenwelle 14 sitzende zweite Abtriebszahnrad 21 ist mittels der Kopplungsvorrichtung 22 drehfest mit der zweiten Zwischenwelle 14 verbunden und überträgt sein Drehmoment wiederum unmittelbar auf das Differentialzahnrad 23, wie durch den gestrichelten Pfeil 33 angedeutet.

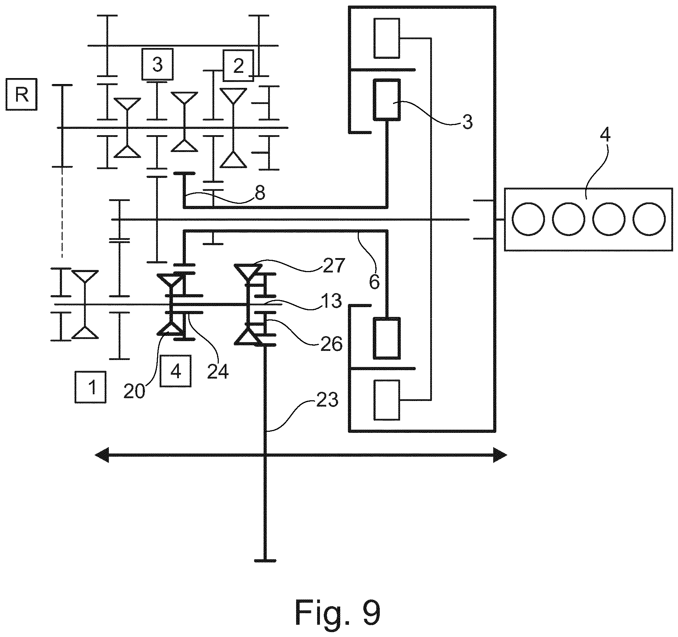

In Fig. 9 ist das Schaltschema des 8. Gangs veranschaulicht, der wiederum als einfacher Basisgang schaltbar ist, und zwar gelangt der Leistungsfluss von dem Antriebsmotor 4 über die Reibkupplung 3 auf die Außenwelle 6. Das drehfest auf dem linken Ende der Außenwelle 6 sitzende Zahnrad 8 kämmt in diesem Falle mit dem auf der ersten Zwischenwelle 13 sitzenden Zahnrad 24, welches mittels der Kopplungsvorrichtung 20 drehfest mit der ersten Zwischenwelle 13 drehfest verbunden ist.

Das auf der ersten Zwischenwelle 13 sitzende Abtriebszahnrad 26 ist ebenfalls durch seine Kopplungsvorrichtung 27 drehfest mit der ersten Zwischenwelle 13 verbunden und überträgt somit das Drehmoment unmittelbar auf das Differentialzahnrad 23.

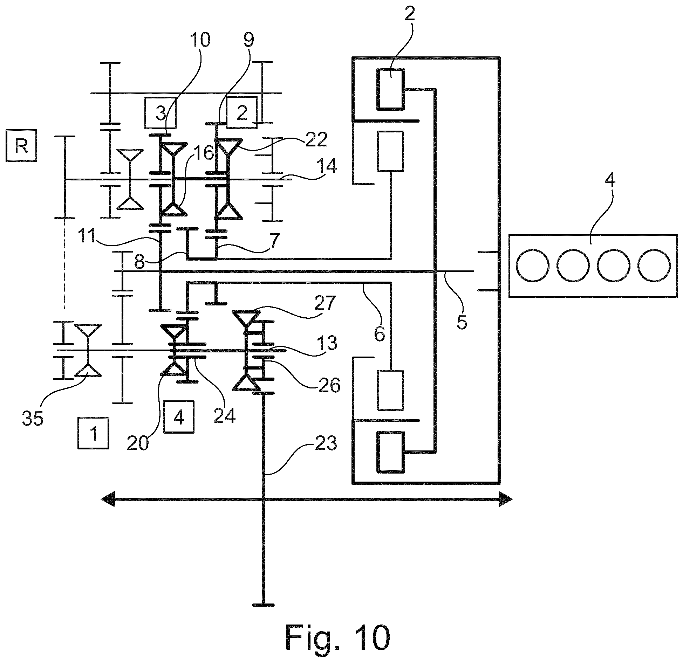

In Fig. 10 ist das Schaltschema des 9. Gangs veranschaulicht, der als Verwindungsgang geschaltet ist, und zwar verläuft der Leistungsfluss von dem Antriebsmotor 4 über die Reibkupplung 2 auf die Innenwelle 5, von dort über das Zahnrad 11 auf das auf der zweiten Zwischenwelle 14 sitzende Zahnrad 10, welches mittels der Kopplungsvorrichtung 16 drehfest mit der zweiten Zwischenwelle 14 verbunden ist.

Von der zweiten Zwischenwelle 14 wird der Leistungsfluss über das mittels der Kopplungsvorrichtung 22 drehfest mit der zweiten Zwischenwelle 14 verbundene Zahnrad 9 auf das Zahnrad 7 der in diesem Falle leer mitlaufenden Außenwelle 6 übertragen. Das ebenfalls auf der Außenwelle 6 sitzende Zahnrad 8 überträgt dann den Leistungsfluss über das Zahnrad 24 auf die erste Zwischenwelle 13, wobei das Zahnrad 24 über die Kopplungsvorrichtung 20 drehfest mit der ersten Zwischenwelle 13 verbunden ist.

Das auf der ersten Zwischenwelle 13 sitzende Abtriebszahnrad 26 ist in diesem Fall mittels der Kopplungsvorrichtung 27 ebenfalls drehfest mit der ersten Zwischenwelle 13 verbunden, sodass das Abtriebszahnrad 26 das Drehmoment unmittelbar auf das Differentialzahnrad 23 übertragen kann.

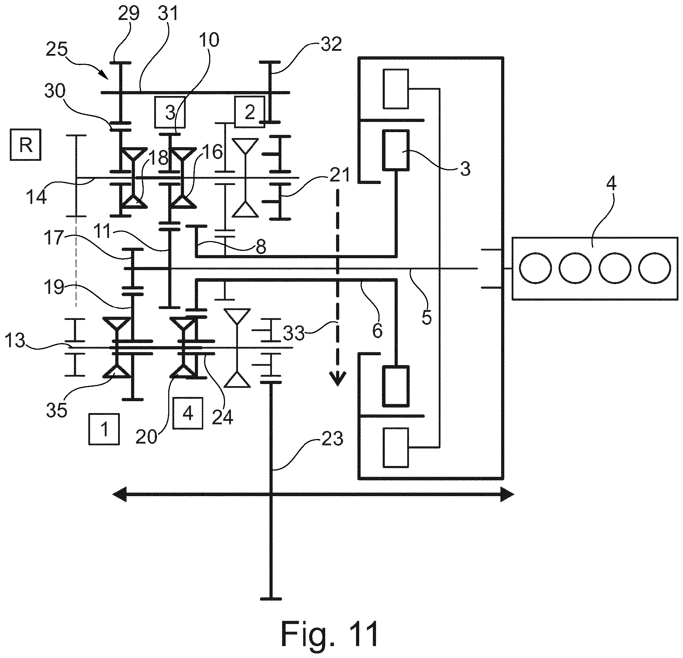

In Fig. 11 ist das Schaltschema für den 10. Gangs veranschaulicht, und zwar handelt es sich hierbei um einen Verwindungsgang unter Zuhilfenahme des Zwischenzahnradsatzes 25.

Der von dem Antriebsmotor 4 ausgehende Leistungsfluss wird in diesem Falle über die Reibkupplung 3 auf die Außenwelle 6 übertragen. Von der Außenwelle 6 gelangt der Leistungsfluss über das am linken Ende der Außenwelle 6 sitzende Zahnrad 8 und das auf der ersten Zwischenwelle 13 sitzende eingekuppelte Zahnrad 24 auf die erste Zwischenwelle 13 und von dort über das auf dieser eingekuppelte Zahnrad 19 und das mit diesem kämmende Zahnrad 17 der lose mitlaufenden Innenwelle 5.

Das ebenfalls auf der Innenwelle 5 sitzende Zahnrad 11 überträgt den Leistungsfluss über das eingekuppelte Zahnrad 10 auf die zweite Zwischenwelle 14, und von dort gelangt der Leistungsfluss über den Zwischenzahnradsatz 25 auf die dritte Zwischenwelle 31, indem das eingekuppelte Zahnrad 30 der zweiten Zwischenwelle 14 mit dem auf der dritten Zwischenwelle 31 drehfest sitzenden Zahnrad 29 kämmt.

Das am rechten Ende der dritten Zwischenwelle 31 sitzende Abtriebszahnrad 32 überträgt dann das Drehmoment auf das lose auf der zweiten Zwischenwelle 14 mitlaufende Abtriebszahnrad 21, welches mit dem Differentialzahnrad 23 kämmt, wie durch den gestrichelten Pfeil 33 angedeutet.

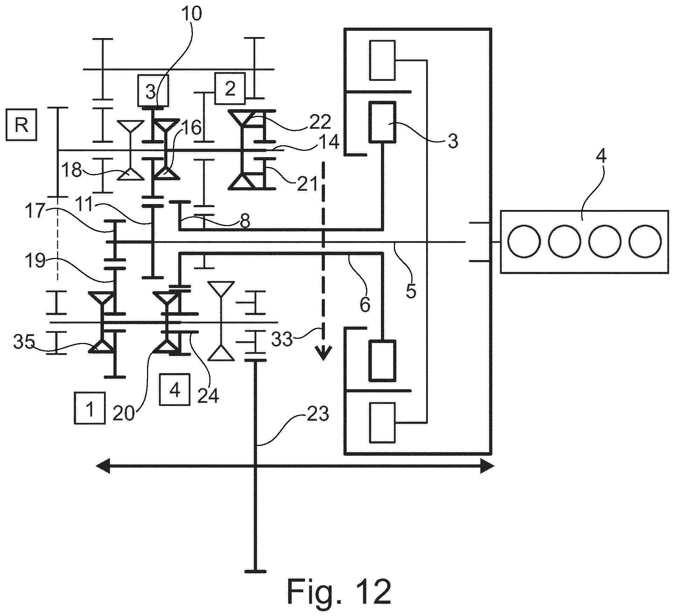

Der in Fig. 12 veranschaulichte 11. Gang ist wiederum ein Verwindungsgang, allerdings ohne Zuhilfenahme des Zwischenzahnradsatzes 25.

Der Leistungsfluss gelangt von dem Antriebsmotor 4 über die Reibkupplung 3 auf die Außenwelle 6, von dort über das Zahnrad 8 auf das eingekuppelte Zahnrad 24 der ersten Zwischenwelle 13 und von dort über das eingekuppelte Zahnrad 19 auf das auf der lose mitlaufenden Innenwelle 5 sitzende Zahnrad 17, und von dort wird das Drehmoment über das ebenfalls auf der Innenwelle 5 sitzende Zahnrad 11 auf das Zahnrad 10 übertragen, welches über die Kopplungsvorrichtung 16 drehfest mit der zweiten Zwischenwelle 14 verbunden ist.

Das auf der zweiten Zwischenwelle 14 sitzende, über die Kopplungsvorrichtung 22 mit der zweiten Zwischenwelle 14 drehfest verbundene Abtriebszahnrad 21 überträgt dann das Drehmoment auf das Differentialzahnrad 23, wie durch den gestrichelten Pfeil 33 angedeutet.

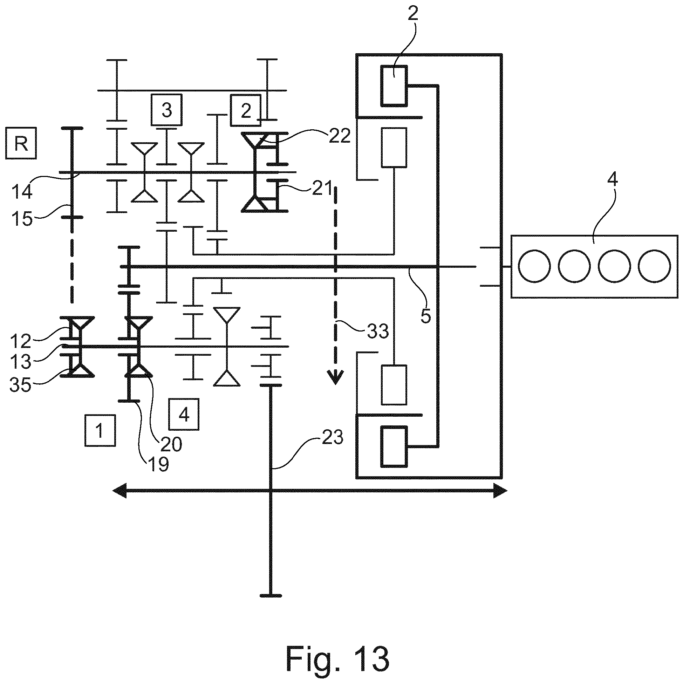

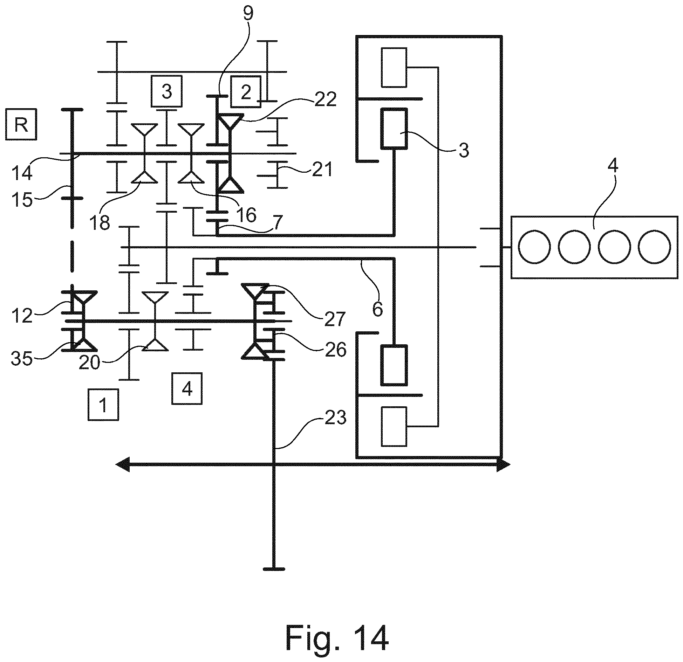

In den Figuren 13 und 14 sind die Schaltschemata der beiden Rückwärtsgänge veranschaulicht, die als Verwindungsgänge ausgebildet sind, und zwar gelangt gemäß Fig. 13 der Leistungsfluss des ersten Rückwärtsgangs von der Innenwelle 5 über die erste Zwischenwelle 13 auf die zweite Zwischenwelle 14, und von der zweiten Zwischenwelle 14 überträgt das mittels der Kopplungsvorrichtung 22 drehfest mit der zweiten Zwischenwelle 14 verbundene Abtriebszahnrad 21 das Drehmoment auf das Differentialzahnrad 23, wie durch den gestrichelten Pfeil 33 angedeutet.

Gemäß Fig. 14 gelangt der Leistungsfluss von der Außenwelle 6 über die zweite Zwischenwelle 14 auf die erste Zwischenwelle 13, wobei das fest auf der zweiten Zwischenwelle 14 sitzende Zahnrad 15 mit dem eingekuppelten Zahnrad 12 der ersten Zwischenwelle 13 kämmt.

Das Abtriebszahnrad 26 der ersten Zwischenwelle 13 ist mittels der Kopplungsvorrichtung 27 drehfest mit der ersten Zwischenwelle 13 verbunden und überträgt sein Drehmoment unmittelbar auf das Differentialzahnrad 23.

Mit dem erfindungsgemäßen Getriebe, welches mit vier Radsätzen und sechs Kopplungsvorrichtungen sowie einem Zwischenradsatz auskommt, können somit elf Vorwärtsgänge und zwei Rückwärtsgänge geschaltet werden, wobei das Gesamtgewicht des Getriebes sowie dessen Abmessungen extrem klein gehalten werden können.

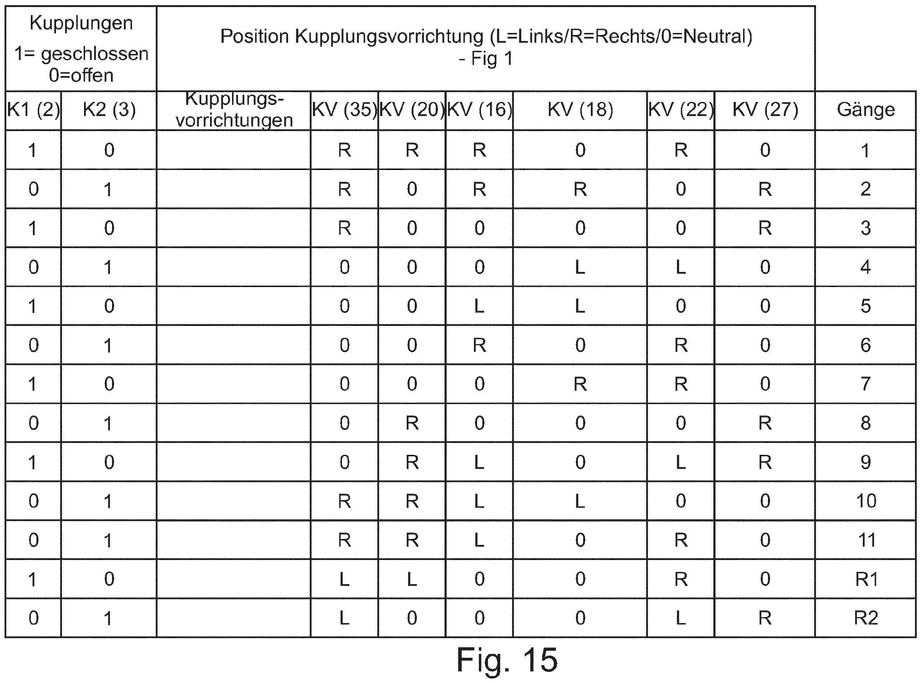

In Fig. 15 ist noch einmal das Schaltschema für sämtliche Gänge, elf Vorwärtsgänge und zwei Rückwärtsgänge, veranschaulicht. Die beiden linken Spalten geben dabei an, welche der beiden Reibkupplungen 2 und 3 geschlossen bzw. geöffnet ist, wobei die Ziffer 1 den geschlossenen Zustand und die Ziffer 0 den offenen Zustand andeutet. In dem mittleren Bereich sind die Schaltstellungen der sechs Kopplungsvorrichtungen veranschaulicht, wobei der Buchstabe "R" die rechte Schaltstellung, der Buchstabe "L" die linke Schaltstellung und die "0" die ungekuppelte Schaltstellung darstellen soll.

### Bezugszeichenliste

- 1: Doppelkupplungsgetriebe
- 2: Reibkupplung (K1)
- 3: Reibkupplung (K2)
- 4: Antriebsmotor
- 5: Innenwelle
- 6: Außenwelle
- 7: Zahnrad
- 8: Zahnrad
- 9: Zahnrad
- 10: Zahnrad
- 11: Zahnrad
- 12: Zahnrad
- 13: erste Zwischenwelle
- 14: zweite Zwischenwelle
- 15: Zahnrad
- 16: Kopplungsvorrichtung
- 17: Zahnrad
- 18: Kopplungsvorrichtung
- 19: Zahnrad
- 20: Kopplungsvorrichtung
- 21: Abtriebszahnrad
- 22: Kopplungsvorrichtung
- 23: Differentialzahnrad
- 24: Zahnrad
- 25: Zwischenzahnradsatz
- 26: Abtriebszahnrad
- 27: Kopplungsvorrichtung
- 29: Zahnrad
- 30: Zahnrad
- 31: dritte Zwischenwelle
- 32: drittes Abtriebszahnrad
- 33: gestrichelter Pfeil
- 35: Kopplungsvorrichtung

## Patentansprüche

1. Doppelkupplungsgetriebe für Kraftfahrzeuge mit
- einer ersten Eingangswelle und einer zweiten Eingangswelle,
- zwei Kupplungen (2, 3), über die die erste Eingangswelle und die zweite Eingangswelle wahlweise mit einem Antriebsmotor (4) kuppelbar sind,
- zwei parallel zu den Getriebeeingangswellen angeordneten Zwischenwellen (13, 14), Zahnradpaarungen von Festrädern und Losrädern, von denen ein erstes Zahnrad auf einer der Eingangswellen und ein zweites Zahnrad auf einer der Zwischenwellen angeordnet ist,
- Kopplungsvorrichtungen, über die die Losräder mit der jeweiligen Zwischenwelle wahlweise verbindbar sind, und
- je einem auf den beiden Zwischenwellen (13, 14) angeordneten Abtriebszahnrad (21, 26), wobei die Abtriebszahnräder beider Zwischenwellen (13, 14) mit einem Differentialrad (23) kämmen und jeweils mittels einer der Kopplungsvorrichtungen (22, 27) drehfest mit der jeweiligen Zwischenwelle wechselweise verbindbar sind,
**dadurch gekennzeichnet,**
**dass** ein zusätzlicher Zwischenzahnradsatz (25) mit genau zwei Zahnrädern (30, 29) vorgesehen ist,
**dass** das eine Zahnrad (30) des Zwischenzahnradsatzes (25) auf der ersten oder zweiten Zwischenwelle sitzt,
**dass** das andere Zahnrad (29) des Zwischenradsatzes (25) auf einer dritten Zwischenwelle (31) angeordnet ist und
**dass** auf der dritten Zwischenwelle (31) ein drittes Abtriebszahnrad (32) sitzt, welches mit einem der Abtriebszahnräder der ersten oder zweiten Zwischenwelle kämmt.

2. Doppelkupplungsgetriebe nach Anspruch 1,
**dadurch gekennzeichnet,**
**dass** sämtliche auf der ersten und zweiten Zwischenwellen (13, 14) angeordneten Zahnräder als Losräder ausgebildet sind und dass zumindest die für die Abtriebszahnräder der ersten und zweiten Zwischenwelle vorgesehenen Kopplungsvorrichtungen (22, 27) beidseitig wirkend ausgebildet sind.

3. Doppelkupplungsgetriebe nach Anspruch 1 oder 2,
**dadurch gekennzeichnet,**
**dass**, wenn der Leistungsfluss über die dritte Zwischenwelle (31) erfolgt, die Abtriebszahnräder (21, 26) der ersten Zwischenwelle (13) und der zweiten Zwischenwelle (14) ausgekuppelt sind und lose auf ihrer jeweiligen Zwischenwelle mitlaufen.

4. Doppelkupplungsgetriebe nach einem der Ansprüche 1 bis 3,
**dadurch gekennzeichnet,**
**dass** das auf der ersten Zwischenwelle (13) oder der zweiten Zwischenwelle (14) sitzende Zahnrad des zusätzlichen Zwischenzahnradsatzes (25) wahlweise mit seiner Zwischenwelle drehfest verbindbar bzw. von dieser lösbar ist.

5. Doppelkupplungsgetriebe nach einem der vorhergehenden Ansprüche,
**dadurch gekennzeichnet,**
**dass** das auf der dritten Zwischenwelle (31) angeordnete dritte Abtriebszahnrad (32) mittels einer Kopplungsvorrichtung wahlweise mit der dritten Zwischenwelle (31) drehfest verbindbar bzw. von dieser lösbar ist.

6. Doppelkupplungsgetriebe nach einem der vorhergehenden Ansprüche,
**dadurch gekennzeichnet,**
**dass** das Getriebe mindestens vier von den in Anspruch 1 genannten Zahnradpaarungen (17-19, 11-10, 8-24, 7-9) sowie einen Zwischenradsatz (25) aufweist.

7. Doppelkupplungsgetriebe nach Anspruch 6,
**dadurch gekennzeichnet,**
**dass** das Getriebe vier von den in Anspruch 1 genannten Zahnradpaarungen (17-19, 11-10, 8-24, 7-9) und mindestens fünf Kopplungsvorrichtungen aufweist.

8. Doppelkupplungsgetriebe nach Anspruch 7,
**dadurch gekennzeichnet,**
**dass** das Getriebe vier von den in Anspruch 1 genannten Zahnradpaarungen (17-19, 11-10, 8-24, 7-9) und sechs Kopplungsvorrichtungen (27, 20, 35, 22, 16, 18) aufweist.

9. Doppelkupplungsgetriebe nach Anspruch 8,
**dadurch gekennzeichnet,**
**dass** elf Vorwärtsgänge und zwei Rückwärtsgänge schaltbar sind.

10. Doppelkupplungsgetriebe nach Anspruch 8 oder 9,
**dadurch gekennzeichnet,**
**dass** der 1., 2., 9. und 11. Vorwärtsgang als Verwindungsgänge über beide Zwischenwellen (13, 14) verlaufen.

11. Doppelkupplungsgetriebe nach einem der Ansprüche 8 bis 10,
**dadurch gekennzeichnet,**
**dass** der 3., 6., 7. und 8. Vorwärtsgang als Basisgänge über die erste Zwischenwelle (13) oder die zweite Zwischenwelle (14) schaltbar sind.

12. Doppelkupplungsgetriebe nach einem der Ansprüche 8 bis 11,
**dadurch gekennzeichnet,**
**dass** der 4. und 5. Vorwärtsgang als Verwindungsgänge über die erste oder zweite Zwischenwelle (13 bzw. 14) sowie über die dritte Zwischenwelle (31) schaltbar sind.

13. Doppelkupplungsgetriebe nach einem der Ansprüche 8 bis 12,
**dadurch gekennzeichnet,**
**dass** der 10. Vorwärtsgang als Verwindungsgang über die erste Zwischenwelle (13), die zweite Zwischenwelle (14) und die dritte Zwischenwelle (31) schaltbar ist.

14. Doppelkupplungsgetriebe nach einem der Ansprüche 8 bis 13,
**dadurch gekennzeichnet,**
**dass** die beiden Rückwärtsgänge als Verwindungsgänge über die erste Zwischenwelle (13) und die zweite Zwischenwelle (14) schaltbar sind.

## Claims

1. Double clutch transmission for motor vehicles having
- a first input shaft and a second input shaft,
- two clutches (2, 3), via which the first input shaft and the second input shaft can be coupled selectively to a drive engine (4),
- two intermediate shafts (13, 14) which are arranged parallel to the transmission input shafts, gearwheel pairings of fixed gears and movable gears, of which a first gearwheel is arranged on one of the input shafts and a second gearwheel is arranged on one of the intermediate shafts,
- coupling apparatuses, via which the movable gears can be connected selectively to the respective intermediate shaft, and
- in each case one output gearwheel (21, 16) which is arranged on the two intermediate shafts (13, 14), the output gearwheels of the two intermediate shafts (13, 14) meshing with a differential gear (23), and it being possible for the said output gearwheels to be connected alternately to the respective intermediate shaft fixedly so as to rotate with it in each case by means of one of the coupling apparatuses (22, 27),
**characterized**
**in that** an additional intermediate gear set (25) with precisely two gearwheels (30, 29) is provided,
**in that** the one gearwheel (30) of the intermediate gear set (25) is seated on the first or second intermediate shaft,
**in that** the other gearwheel (29) of the intermediate gear set (25) is arranged on a third intermediate shaft (31), and
**in that** a third output gearwheel (32) is seated on the third intermediate shaft (31), which third output gearwheel (32) meshes with one of the output gearwheels of the first or second intermediate shaft.

2. Double clutch transmission according to Claim 1,
**characterized**
**in that** all of the gearwheels which are arranged on the first and second intermediate shafts (13, 14) are configured as movable gears, and in that at least the coupling apparatuses (22, 27) which are provided for the output gearwheels of the first and second intermediate shaft are configured so as to act on both sides.

3. Double clutch transmission according to Claim 1 or 2,
**characterized**
**in that**, when the power flow takes places via the third intermediate shaft (31), the output gearwheels (21, 26) of the first intermediate shaft (13) and the second intermediate shaft (14) are decoupled and run loosely on their respective intermediate shaft.

4. Double clutch transmission according to one of Claims 1 to 3,
**characterized**
**in that** that gearwheel of the additional intermediate gearwheel set (25) which is seated on the first intermediate shaft (13) or the second intermediate shaft (14) can selectively be connected fixedly to its intermediate shaft so as to rotate with it and can be released from the latter.

5. Double clutch transmission according to one of the preceding claims,
**characterized**
**in that** the third output gearwheel (32) which is arranged on the third intermediate shaft (31) can selectively be connected by means of a coupling apparatus fixedly to the third intermediate shaft (31) so as to rotate with it and can be released from the latter.

6. Double clutch transmission according to one of the preceding claims,
**characterized**
**in that** the transmission has at least four of the gearwheel pairings (17-19, 11-10, 8-24, 7-9) mentioned in Claim 1 and an intermediate gear set (25).

7. Double clutch transmission according to Claim 6,
**characterized**
**in that** the transmission has four of the gearwheel pairings (17-19, 11-10, 8-24, 7-9) mentioned in Claim 1 and at least five coupling apparatuses.

8. Double clutch transmission according to Claim 7,
**characterized**
**in that** the transmission has four of the gearwheel pairings (17-19, 11-10, 8-24, 7-9) mentioned in Claim 1 and six coupling apparatuses (27, 20, 35, 22, 16, 18).

9. Double clutch transmission according to Claim 8,
**characterized**
**in that** eleven forward gears and two reverse gears can be selected.

10. Double clutch transmission according to Claim 8 or 9,
**characterized**
**in that** the first, second, ninth and eleventh forward gears run as winding path gears via both intermediate shafts (13, 14).

11. Double clutch transmission according to one of Claims 8 to 10,
**characterized**
**in that** the third, sixth, seventh and eighth forward gear can be selected as basic gears via the first intermediate shaft (13) or the second intermediate shaft (14).

12. Double clutch transmission according to one of Claims 8 to 11,
**characterized**
**in that** the fourth and fifth forward gear can be selected as winding path gears via the first or second intermediate shaft (13 or 14) and via the third intermediate shaft (31).

13. Double clutch transmission according to one of Claims 8 to 12,
**characterized**
**in that** the tenth forward gear can be selected as a winding path gear via the first intermediate shaft (13), the second intermediate shaft (140 and the third intermediate shaft (31).

14. Double clutch transmission according to one of Claims 8 to 13,
**characterized**
**in that** the two reverse gears can be selected as winding path gears via the first intermediate shaft (13) and the second intermediate shaft (14).

## Revendications

1. Boîte de vitesses à double embrayage pour véhicules automobiles, comprenant
- un premier arbre d'entrée et un deuxième arbre d'entrée,
- deux embrayages (2, 3) par le biais desquels le premier arbre d'entrée et le deuxième arbre d'entrée peuvent être accouplés de manière sélective à un moteur d'entraînement (4),
- deux arbres intermédiaires (13, 14) disposés parallèlement aux arbres d'entrée de boîte de vitesses, des appariements de roues dentées de roues fixes et de roues libres, dont une première roue dentée est disposée sur l'un des arbres d'entrée et une deuxième roue dentée est disposée sur l'un des arbres intermédiaires,
- des dispositifs de couplage par le biais desquels les roues libres peuvent être connectées de manière sélective à l'arbre intermédiaire respectif, et
- à chaque fois une roue dentée de prise de force (21, 26) disposée sur les deux arbres intermédiaires (13, 14), les roues dentées de prise de force des deux arbres intermédiaires (13, 14) s'engrenant avec une roue différentielle (23) et pouvant être connectées à chaque fois en alternance au moyen de l'un des dispositifs de couplage (22, 27) de manière solidaire en rotation à l'arbre intermédiaire respectif,
**caractérisée en ce**
**qu'**un jeu de roues dentées intermédiaires supplémentaire (25) est prévu avec exactement deux roues dentées (30, 29),
en ce que l'une des roues dentées (30) du jeu de roues dentées intermédiaires (25) repose sur le premier ou le deuxième arbre intermédiaire,
en ce que l'autre roue dentée (29) du jeu de roues intermédiaires (25) est disposée sur un troisième arbre intermédiaire (31) et
en ce qu'une troisième roue dentée de prise de force (32) repose sur le troisième arbre intermédiaire (31), laquelle s'engrène avec l'une des roues dentées de prise de force du premier ou du deuxième arbre intermédiaire.

2. Boîte de vitesses à double embrayage selon la revendication 1,
**caractérisée en ce que**
toutes les roues dentées disposées sur le premier et le deuxième arbre intermédiaire (13, 14) sont réalisées sous forme de roues libres et **en ce qu'**au moins les dispositifs de couplage (22, 27) prévus pour les roues dentées de prise de force du premier et du deuxième arbre intermédiaire sont réalisés de manière à agir des deux côtés.

3. Boîte de vitesses à double embrayage selon la revendication 1 ou 2,
**caractérisée en ce que**
lorsque le flux de puissance passe par le troisième arbre intermédiaire (31), les roues dentées de prise de force (21, 26) du premier arbre intermédiaire (13) et du deuxième arbre intermédiaire (14) sont désaccouplées et tournent librement sur leur arbre intermédiaire respectif.

4. Boîte de vitesses à double embrayage selon l'une quelconque des revendications 1 à 3,
**caractérisée en ce que**
la roue dentée du jeu de roues dentées intermédiaires supplémentaire (25), reposant sur le premier arbre intermédiaire (13) ou le deuxième arbre intermédiaire (14), peut être connectée de manière solidaire en rotation à son arbre intermédiaire ou être détachée de celui-ci, de manière sélective.

5. Boîte de vitesses à double embrayage selon l'une quelconque des revendications précédentes,
**caractérisée en ce que**
la troisième roue dentée de prise de force (32) disposée sur le troisième arbre intermédiaire (31) peut être connectée de manière solidaire en rotation au moyen d'un dispositif de couplage au troisième arbre intermédiaire (31) ou peut être détachée de celui-ci, de manière sélective.

6. Boîte de vitesses à double embrayage selon l'une quelconque des revendications précédentes,
**caractérisée en ce que**
la boîte de vitesses présente au moins quatre des appariements de roues dentées (17-19, 11-10, 8-24, 7-9) cités dans la revendication 1, ainsi qu'un jeu de roues intermédiaires (25).

7. Boîte de vitesses à double embrayage selon la revendication 6,
**caractérisée en ce que**
la boîte de vitesses présente quatre des appariements de roues dentées (17-19, 11-10, 8-24, 7-9) cités dans la revendication 1, et au moins cinq dispositifs de couplage.

8. Boîte de vitesses à double embrayage selon la revendication 7,
**caractérisée en ce que**
la boîte de vitesses présente quatre des appariements de roues dentées (17-19, 11-10, 8-24, 7-9) cités dans la revendication 1, et six dispositifs de couplage (27, 20, 35, 22, 16, 18).

9. Boîte de vitesses à double embrayage selon la revendication 8,
**caractérisée en ce que**
onze vitesses de marche avant et deux vitesses de marche arrière peuvent être commutées.

10. Boîte de vitesses à double embrayage selon la revendication 8 ou 9,
**caractérisée en ce que**
les première, deuxième, neuvième et onzième vitesses de marche avant s'étendent en tant que vitesses à trajet sinueux sur les deux arbres intermédiaires (13, 14).

11. Boîte de vitesses à double embrayage selon l'une quelconque des revendications 8 à 10,
**caractérisée en ce que**
les troisième, sixième, septième et huitième vitesses de marche avant peuvent être commutées en tant que vitesses de base par le biais du premier arbre intermédiaire (13) ou du deuxième arbre intermédiaire (14).

12. Boîte de vitesses à double embrayage selon l'une quelconque des revendications 8 à 11,
**caractérisée en ce que**
les quatrième et cinquième vitesses de marche avant peuvent être commutées en tant que vitesses à trajet sinueux par le biais du premier ou du deuxième arbre intermédiaire (13, respectivement 14) ainsi que du troisième arbre intermédiaire (31) .

13. Boîte de vitesses à double embrayage selon l'une quelconque des revendications 8 à 12,
**caractérisée en ce que**
la dixième vitesse de marche avant peut être commutée en tant que vitesse à trajet sinueux par le biais du premier arbre intermédiaire (13), du deuxième arbre intermédiaire (14) et du troisième arbre intermédiaire (31).

14. Boîte de vitesses à double embrayage selon l'une quelconque des revendications 8 à 13,
**caractérisée en ce que**
les deux vitesses de marche arrière peuvent être commutées en tant que vitesses à trajet sinueux par le biais du premier arbre intermédiaire (13) et du deuxième arbre intermédiaire (14).
